# FASCICULE DE BREVET EUROPEEN

(11) **EP 3 778 284 B1**
(45) Date de publication et mention de la délivrance du brevet: **16.02.2022**
(21) Numéro de dépôt: 20187186.0
(22) Date de dépôt: 22.07.2020
(51) Int. Cl.: B60K 37/04, B60K 37/06

(54) **ENSEMBLE DE FIXATION POUR FIXER AU MOINS DEUX PIÈCES ENTRE ELLES**
BEFESTIGUNGSANORDNUNG ZUR BEFESTIGUNG VON MINDESTENS ZWEI TEILEN UNTEREINANDER
ATTACHMENT ASSEMBLY FOR ATTACHING AT LEAST TWO PARTS TOGETHER

(30) Priorité: 24.07.2019 FR 1908409
(43) Date de publication de la demande: 17.02.2021
(73) Titulaire: Faurecia Intérieur Industrie, 92000 Nanterre (FR)
(72) Inventeur: FABRIS, Stéphane, 95260 MOURS (FR)
(74) Mandataire: Lavoix

(56) Documents cités:
- DE-A1- 10 127 342
- US-A- 5 739 465
- US-A1- 2012 049 561

## Description

La présente invention concerne selon un premier aspect un ensemble de fixation pour fixer au moins deux pièces entre elles selon le préambule de la revendication 1.

DE 101 27 342 A1 décrit par exemple un tel ensemble de fixation.

Ce type d'ensemble est par exemple utilisé dans le domaine automobile. Cet ensemble permet de fixer des pièces rapportées comme par exemple des interrupteurs ou des panneaux de commandes sur un élément de garnissage du véhicule, comme par exemple un accoudoir, une console ou une planche de bord.

La deuxième pièce permet une intégration harmonieuse des pièces rapportées dans l'élément de garnissage et facilite également leur montage.

En cas de choc du véhicule, les premiers et deuxièmes organes de fixation peuvent se rompre et provoquer l'éjection de la première pièce dans l'habitacle du véhicule. La première pièce devient alors un dangereux projectile pour les passagers et peut provoquer des blessures importantes.

Il est connu un ensemble de fixation comprenant une première pièce comportant une languette anti-éjection. La languette est destinée à venir en butée contre une surface de la deuxième pièce en cas de choc pour empêcher l'éjection.

Cependant, cette solution n'est pas entièrement satisfaisante. En effet, le risque d'éjection de la première pièce existe toujours.

Un objet de l'invention est d'améliorer encore ce type d'ensemble de fixation et de fournir un ensemble qui empêche l'éjection de la première pièce dans l'habitacle du véhicule tout en étant facilement démontable sans entrainer la casse d'un élément de l'ensemble

À cet effet, l'invention concerne un ensemble de fixation du type précité selon la revendication 1.

Ainsi, lors d'un choc du véhicule, la première pièce est maintenue fixée à la deuxième pièce dans la position de retenue grâce à la coopération entre la languette et la nervure. La première pièce ne peut pas se désolidariser entièrement de la deuxième pièce et ne peut pas être éjectée dans l'habitacle du véhicule. La languette déformable facilite l'insertion ou le retrait de la première pièce dans l'ouverture de réception.

Selon d'autres aspects de l'invention, l'ensemble comprend une ou plusieurs des caractéristiques des revendications 2 à 9, prises isolément ou selon toutes les combinaisons techniques possibles.

L'invention concerne également selon un deuxième aspect un élément de garnissage d'un véhicule automobile selon la revendication 10.

D'autres aspects et avantages de l'invention apparaitront à la lecture de la description qui suit, donnée à titre d'exemple et faite en référence aux dessins annexés, parmi lesquels :
- [Fig 1] la figure 1 est une vue partielle en perspective d'un élément de garnissage selon l'invention ;
- [Fig 2] la figure 2 est une vue en coupe longitudinale de l'ensemble de la figure 1 ;
- [Fig 3] la figure 3 est une vue en coupe longitudinale de l'ensemble de fixation de la figure 1 dans une position intermédiaire de fixation ;
- [Fig 4] la figure 4 est une vue en coupe longitudinale de l'ensemble de fixation de la figure 1 dans une position de retenue ;
- [Fig 5] la figure 5 est une vue de la languette de la première pièce lors du démontage de la première pièce.

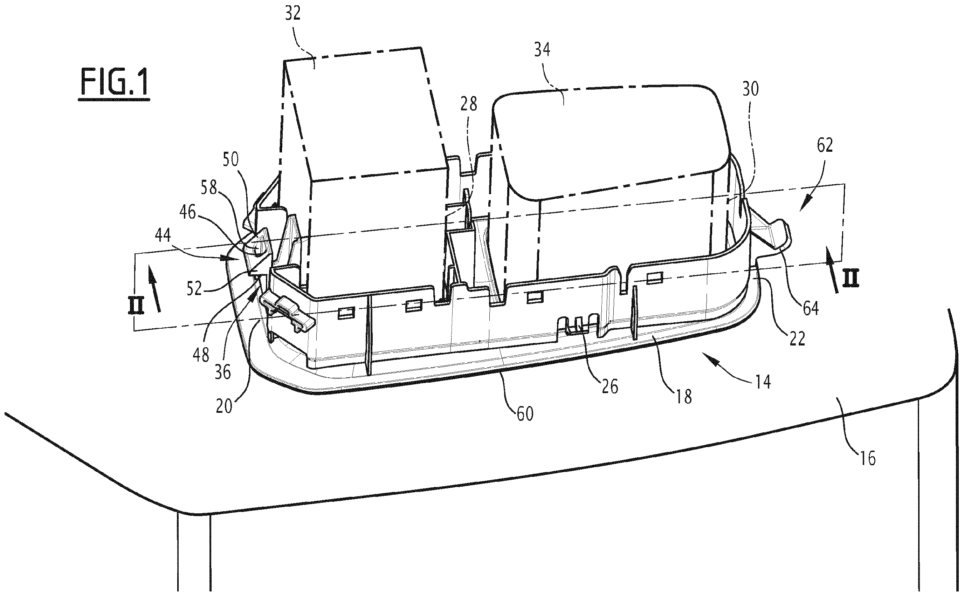

La figure 1 présente une vue partielle en perspective d'un élément de garnissage 10 selon l'invention.

L'élément de garnissage 10 est par exemple un accoudoir de siège de véhicule automobile, un panneau de garnissage de porte de véhicule automobile, une planche de bord de véhicule automobile, etc.

L'élément de garnissage 10 comprend un ensemble de fixation 12 pour fixer au moins deux pièces 14, 16 entre elles.

L'ensemble de fixation 10 comprend une première pièce 14 comprenant un corps principal 18 s'étendant depuis une première extrémité 20 vers une deuxième extrémité 22 selon une première direction principale L1, correspondant à la direction longitudinale, et au moins une deuxième pièce 16 définissant une ouverture de réception 24 recevant la première pièce 14.

La deuxième pièce 16 est par exemple un corps de l'élément de garnissage.

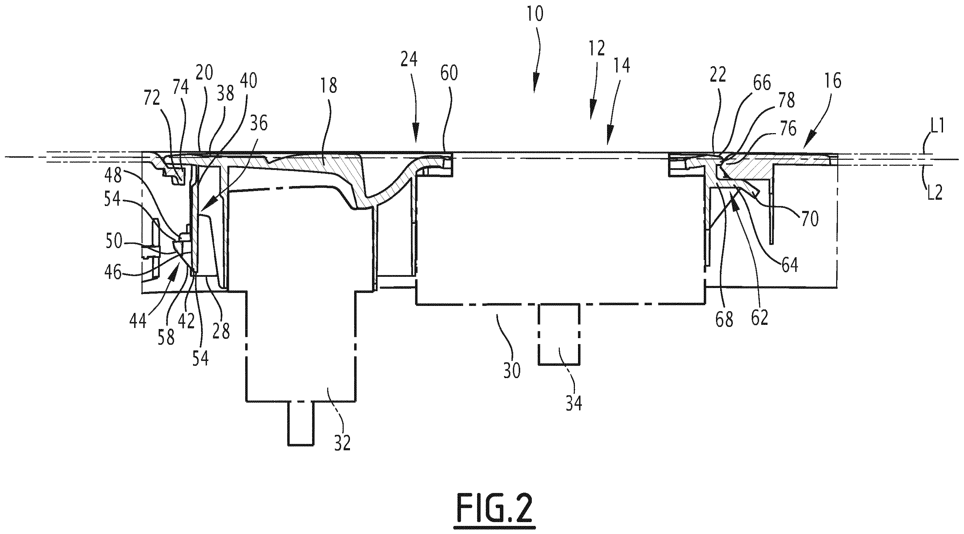

La première pièce 14 et la deuxième pièce 16 comprennent respectivement des premiers et des deuxièmes organes de fixation 26 coopérant entre eux dans une position de fixation telle que représenté sur la figure 2.

Par exemple, la première pièce 14 et la deuxième pièce 16 sont fixées par encliquetage. Comme visible plus en détail sur la figure 1, les premiers organes de fixation 26 comprennent par exemple des languettes d'encliquetage. Les deuxièmes organes de fixation comprennent par exemple des orifices d'encliquetage (non représentés) complémentaires des languettes d'encliquetage.

Le corps principal 18 de la première pièce 14 définit au moins une ouverture 28, 30 de réception d'au moins une pièce rapportée 32, 34 à fixer sur la deuxième pièce 16.

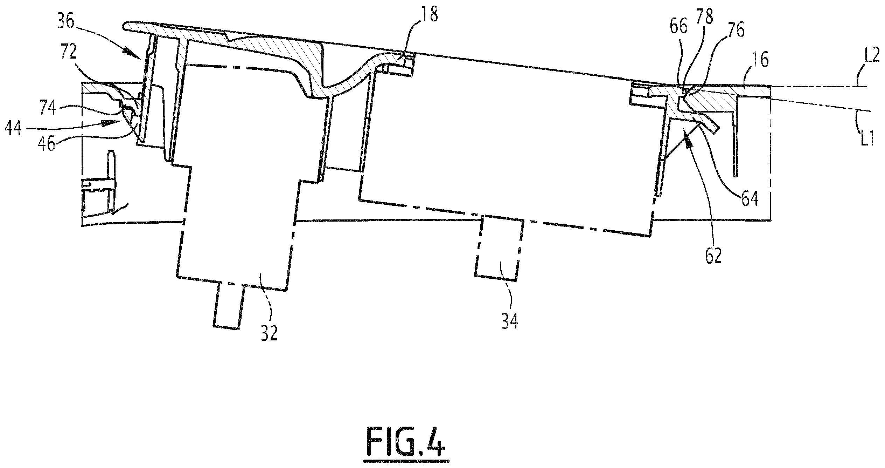

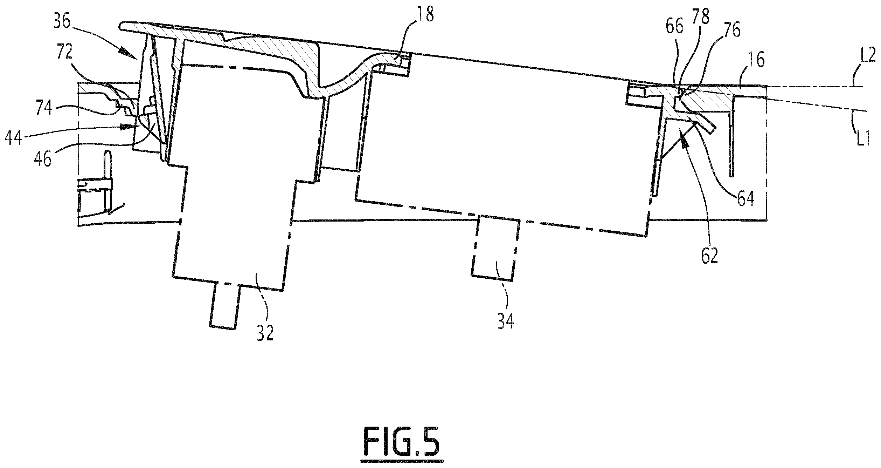

Dans l'exemple des figures 1 à 5, le corps principal 18 définit deux ouvertures 28, 30 de réception.

La pièce rapportée 32, 34 est par exemple un interrupteur, un organe de commande tel qu'une molette de contrôle, un panneau de commande, etc.

Le corps principal 18 forme par exemple une platine de fixation desdites pièces rapportées 32, 34 sur la deuxième pièce 16.

La première pièce 14 est par exemple en plastique ou en métal, de préférence en plastique.

Le corps principal 18 comprend une languette 36 s'étendant selon une direction sensiblement perpendiculaire à la première direction principale L1.

Dans la position de fixation, la languette 36 s'étend vers l'intérieur de l'ouverture de réception 24 de la deuxième pièce 16 et n'est pas visible depuis l'extérieur du corps principal 18.

La languette 36 forme une attache anti-éjection de la première pièce 14. On peut également parler de « clip » anti-éjection en référence au mot anglais qui signifie « attache ».

La languette 36 est fixée sur un pourtour 38 de la première pièce 14.

La languette 36 est alors facilement accessible lorsque la première pièce 14 est déboîtée. L'utilisateur peut ainsi facilement exercer une pression sur la languette 36 pour faciliter le démontage de la première pièce 14 ; comme cela sera décrit ultérieurement.

La languette 36 comprend une première extrémité 40 et une deuxième extrémité 42.

La première extrémité 40 est fixée au corps principal 18.

Selon un mode de réalisation, la languette 36 est venue de matière avec le corps principal 18.

La deuxième extrémité 42 comprend un organe de butée 44.

L'organe de butée 44 présente par exemple une forme de prisme à base triangulaire.

L'organe de butée 44 comprend une face biseautée.

L'organe de butée 44 est situé du côté de la languette orienté vers la périphérie de la première pièce 14.

Avantageusement, l'organe de butée 44 définit un logement 46.

La languette 36 et l'organe de butée 44 sont de manière préférentielle formés d'un seul tenant de façon à éviter la désolidarisation de l'organe de butée 44 lors d'un choc du véhicule. L'organe de butée 44 est par exemple venu de matière avec la languette 36.

Plus particulièrement, l'organe de butée 44 comprend une face supérieure 48 et une face inférieure 50 reliées entre elles par deux faces latérales 52.

Les termes « supérieur » et « inférieur » sont définis par rapport une direction d'insertion perpendiculaire à la première direction principale de la première pièce 14 et correspondant à la direction d'insertion de la première pièce 14 dans la deuxième pièce 16.

La face inférieure 50 est la face biseautée. La face inférieure 50 relie la face supérieure 48 à un bord inférieur 54 de la deuxième extrémité 42.

Le logement 46 est traversant depuis la face supérieure 48 vers la face inférieure 50.

Le logement 46 définit une ouverture supérieure 56 dans la face supérieure 48 et une ouverture inférieure 58 dans la face inférieure 50.

Selon l'invention, la languette 36 est déformable élastiquement par rapport au corps principal 18. Ainsi, en exerçant une pression sur la languette 36 vers une partie centrale 60 du corps principal 18, la languette 36 se plie sans rupture. La déformation de la languette 36 se fait perpendiculairement à la direction d'insertion et selon la première direction principale L1. Lorsque la pression n'est plus exercée sur la languette 36, la languette 36 revient dans position initiale.

La déformabilité de la languette 36 est par exemple obtenue en réduisant l'épaisseur de la languette 36 au niveau de la première extrémité 40 liée au corps principal 18.

Préférentiellement, la première pièce 14 comprend en outre un crochet de retenue 62. Le crochet de retenue 62 s'étend en saillie du corps à partir de la deuxième extrémité 22 disposée à l'opposé de l'extrémité 20 portant la languette 36 selon la première direction principale.

Le crochet de retenue 62 est disposé sur le pourtour 38 de la première pièce 14.

Le crochet de retenue 62 comprend une patte inférieure 64 et une patte supérieure 66.

La patte inférieure 64 comprend une première partie 68 connectée au pourtour 38 de la première pièce 14 et une deuxième partie 70 connectée à la première partie 68.

La première partie 68 s'étend principalement selon une première direction sensiblement parallèle à la direction principale L1. La deuxième partie 70 s'étend selon une deuxième direction sécante à la première direction.

La première direction et la deuxième direction forment par exemple un angle compris entre 100° et 160°.La deuxième pièce 14 s'étend principalement selon une deuxième direction principale L2.

Dans la position de fixation de la première pièce 14 et de la deuxième pièce 16, la première direction principale L1 et la deuxième direction principale L2 sont sensiblement confondues ou parallèles entre elles.

Dans la position de fixation, au moins une partie du bord périphérique de la première pièce 14 est en appui sur le bord périphérique de l'ouverture de réception 24 de la deuxième pièce 16 selon la direction d'insertion. Cela permet à la première pièce 14 d'être retenue par le bord périphérique de l'ouverture de réception 24.

La deuxième pièce 16 comprend une nervure 72 en saillie vers l'intérieur de l'ouverture de réception 24.

Avantageusement, la nervure 72 comprend un chanfrein 74 pour faciliter le débattement de la languette 36 comme nous le verrons plus loin.

Selon l'invention, la première pièce 14 est mobile entre au moins la position de fixation (figure 2) dans laquelle la première pièce 14 est positionnée dans l'ouverture de réception 24 et la nervure 72 est à l'écart de l'organe de butée 44 de la languette 36, et une position de retenue dans laquelle la première pièce 14 est disposée en saillie par rapport à la deuxième pièce 16, la nervure 72 étant en butée contre l'organe de butée 44 de la languette 36.

Dans le mode de réalisation dans lequel l'organe de butée comprend un logement 46, l'introduction de la nervure 72 dans le logement de la languette 36 améliore la retenue de la première pièce 14 et empêche son éjection.

La position de fixation est obtenue lorsque les premiers et les deuxièmes organes de fixation 26 coopèrent entre eux.

Dans la position de fixation, le logement est à l'écart de la nervure selon la direction d'insertion. De préférence, dans la position de fixation, la distance entre la nervure et le logement est comprise entre 12 mm et 20 mm.

La position de retenue correspond à la position de l'ensemble de fixation 12 en cas de choc du véhicule et de déboitement de la première pièce 14. En effet, le choc entraîne la désolidarisation des premiers et deuxième organes de fixation 26. Le choc entraîne le déplacement de la première pièce 14 selon une direction opposée à la direction d'insertion.

Dans cette position, la première pièce 14 reste solidaire de la deuxième pièce 16. L'éjection de la première pièce 14 est empêchée.

Plus particulièrement, lors du passage entre la position de fixation et la position de retenue, la nervure 72 est reçue dans le logement 46 par la face supérieure 48 de l'organe de butée 44. La nervure 72 pénètre dans le logement 46 et assure la retenue de la languette 36. La languette 36 ne peut alors pas passer au-delà de la nervure 72 et sortir hors de l'ouverture de réception 24.

Dans la position de retenue, le crochet de retenue 62, et plus particulièrement la patte supérieure 66, est en appui sur un bord 76 de l'ouverture de réception 24.

En complément, la patte supérieure 66 est par exemple également en appui sur le bord 76 de l'ouverture de réception 24 dans la position de fixation.

La patte inférieure 64 du crochet de retenue 62 est disposée sous le bord 76 de l'ouverture de réception 24 dans la position de fixation et dans la position de retenue.

Lors du passage de la position de fixation vers la position de retenue, la première pièce 14 est mobile en rotation par rapport à la deuxième pièce 16 autour d'un axe de rotation A1 sensiblement perpendiculaire à la première direction principale L1 et/ou à la deuxième direction principale L2 et à la direction d'insertion.

L'axe de rotation A1 passe sensiblement par une surface d'appui 78 entre le crochet de retenue 62 et la deuxième pièce 16, et plus particulièrement entre le crochet de retenue 62 et le bord 76 de l'ouverture de réception 24.

Il est entendu ici que le mouvement de rotation de la première pièce 14 peut, selon certains modes de réalisation et selon le type de choc, comporter une composante de glissement de la patte supérieure 66 du crochet de retenue 62 sur le bord 76 de l'ouverture de réception 24. Cette composante du mouvement demeure néanmoins minime et d'un point de vue macroscopique, et compte tenu de la cinématique du déplacement de la première pièce 14 en cas de choc, le mouvement dominant est un mouvement de rotation par rapport à la deuxième pièce 16.

Un procédé d'installation de la première pièce 14 dans l'ouverture de réception 24 de la deuxième pièce 16 va maintenant être décrit.

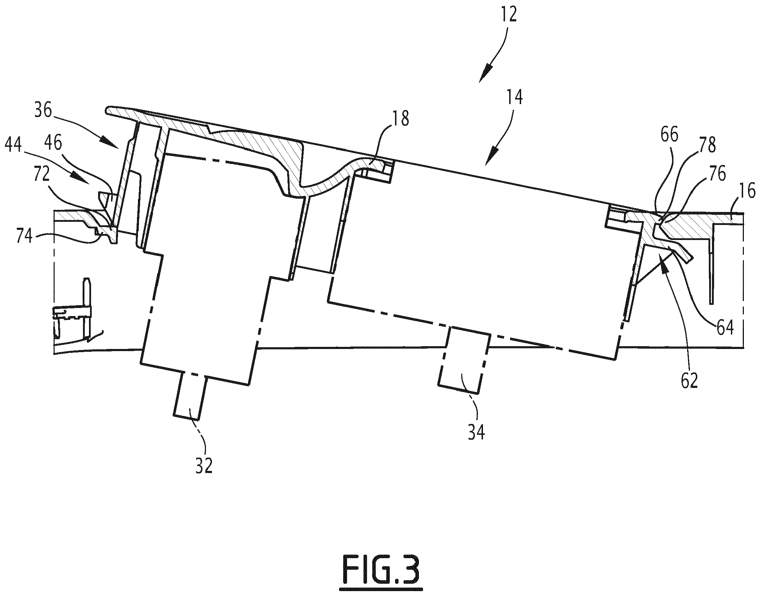

Dans une première étape, le crochet de retenue 62 est disposé sur le bord 76 de l'ouverture de réception 24 de la deuxième pièce 16. Plus particulièrement la patte supérieure 66 est positionnée en appui sur le bord 76 de l'ouverture de réception 24 et la patte inférieure 64 est insérée sous le bord 76 comme visible sur la figure 3.

Une pression vers l'intérieur de l'ouverture de réception 24 selon la direction d'insertion est ensuite exercée par un utilisateur sur la languette 36. La languette 36 se déforme élastiquement, l'organe de butée 44 est alors disposé à l'intérieur de l'ouverture de réception 24.

Si l'organe de butée 44 comprend une face biseautée, un glissement de l'organe de butée 44 sur le bord de l'ouverture de réception 24 entraine la déformation de la languette 36 lorsque l'utilisateur applique une pression sur le corps principal 18 selon la direction d'insertion. Ainsi, le montage est facilité.

La première pièce 14 est ensuite insérée dans l'ouverture de réception 24 par un mouvement de rotation par rapport à la deuxième pièce 16 autour de l'axe de rotation A1.

La languette 36 retrouve alors sa forme et sa position initiale non déformée. La languette 36 est ainsi positionnée de sorte que la nervure 72 se trouve sur sa trajectoire lors d'un choc, et qu'elle pénètre dans le logement 46.

Les premiers et deuxièmes organes de fixation 26 coopèrent entre eux.

La première pièce 14 et la deuxième pièce 16 sont alors dans la position de fixation. Dans une première étape, la languette 36 et la nervure 72 sont désengagées l'une de l'autre en exerçant une pression sur la première pièce 14 vers l'intérieur de l'ouverture de réception 14.

Puis, une pression vers le centre de l'ouverture de réception 24 est exercée par l'utilisateur sur la languette 36. Celle-ci se déforme en fléchissant. La première pièce 14 est alors retirée de la deuxième pièce 16.

L'utilisateur accède facilement à la languette 36 et le démontage de l'ensemble selon l'invention est facilité.

Le chanfrein 74 de la nervure 72 qui s'étend selon une direction sensiblement parallèle à l'axe de rotation A1 facilite le désengagement de la première pièce 14.

Ainsi, l'ensemble de fixation 12 selon l'invention est particulièrement avantageux car il permet d'éviter l'éjection de la première pièce 14 en cas de choc du véhicule. De plus, l'installation et la désinstallation de la première pièce 14 dans la deuxième pièce 16 est particulièrement facilitée grâce à la languette 36 déformable élastiquement.

La force de retenue entre les premiers et deuxièmes éléments de fixation 26 est par exemple comprise entre 15 et 30 N.m⁻¹, par exemple 20 N.m⁻¹.

Si la force d'éjection de la première pièce 14 est supérieure à cette force de retenue, les premiers et deuxièmes éléments 26 ne coopèrent plus.

Ainsi, lors d'un choc, la coopération entre la nervure 72 et la languette 36 garantit la solidarisation de la première pièce 14 et de la deuxième pièce 16.

L'ensemble selon l'invention est particulièrement avantageux car il est peu encombrant et ne requiert pas de pièces supplémentaires pour assurer la fonction anti-éjection.

L'ensemble est particulièrement adapté pour fixer des pièces rapportées 32, 34 comprenant des éléments électriquement connectés au véhicule côté non visible car il permet un accès facilité à l'interface électrique. L'ensemble selon l'invention permet la fixation d'éléments comme par exemple des modules de commande électrique et plus particulièrement de commande d'ouverture/fermeture de vitre et/ou de commande de verrouillage de portes.

## Revendications

1. Ensemble de fixation (12) pour fixer au moins deux pièces (14, 16) entre elles, l'ensemble (12) comprenant :
- une première pièce (14) comprenant un corps principal (18) s'étendant principalement selon une première direction principale (L1),
- au moins une deuxième pièce (16) définissant une ouverture de réception (24) recevant la première pièce (14),
la première pièce (14) comprenant en outre une languette (36), la languette (36) étant déformable élastiquement par rapport au corps principal (18) et comprenant un organe de butée (44), la deuxième pièce (16) comprenant une nervure (72)
**caractérisé en ce que** la première pièce (14) et la deuxième pièce (16) comprennent en outre respectivement des premiers et des deuxièmes organes de fixation (26) coopérant entre eux dans une position de fixation,
la première pièce (14) étant mobile entre au moins la position de fixation dans laquelle la première pièce (14) est positionnée dans l'ouverture de réception (24) et la nervure (72) est à l'écart de l'organe de butée (44) de la languette (36), et une position de retenue dans laquelle la première pièce (14) est disposée en saillie par rapport à la deuxième pièce (16), la nervure (72) étant en butée contre l'organe de butée (44) de la languette (36).

2. Ensemble (12) selon la revendication 1, dans lequel la première pièce (14) comprend en outre un crochet de retenue (62), la languette (36) et le crochet de retenue (62) étant disposés à l'opposé l'un de l'autre selon la première direction principale (L1) sur un pourtour (38) de la première pièce (14).

3. Ensemble (12) selon la revendication 2, dans lequel le crochet de retenue (62) est en appui sur un bord (76) de l'ouverture de réception (24) au moins dans la position de retenue.

4. Ensemble (12) selon la revendication 3, dans lequel le crochet de retenue (62) comprend une patte inférieure (64) s'étendant selon une direction sensiblement parallèle à la première direction principale (L1), la patte inférieure (64) étant disposée sous le bord (76) de l'ouverture de réception (76) dans la position de fixation et la position de retenue.

5. Ensemble (12) selon l'une quelconque des revendications 1 à 4, dans lequel la première pièce (14) est mobile en rotation par rapport à la deuxième pièce (16) autour d'un axe de rotation (A1) sensiblement perpendiculaire à la première direction principale (L1) entre la position de fixation et la position de retenue.

6. Ensemble (12) selon la revendication 5, dans lequel l'axe de rotation (A1) passe sensiblement par une surface d'appui (78) entre le crochet de retenue (62) et la deuxième pièce (16).

7. Ensemble (12) selon la revendication 5 ou 6, dans lequel la nervure (72) comprend un chanfrein (74) s'étendant selon une direction sensiblement parallèle à l'axe de rotation (A1).

8. Ensemble (12) selon l'une quelconque des revendications 1 à 7, dans lequel l'organe de butée (44) définit un logement (46), la nervure (72) étant reçue en butée dans le logement (46) dans la position de retenue.

9. Ensemble selon l'une quelconque des revendications 1 à 8, dans lequel le corps principal (18) de la première pièce (14) définit au moins une ouverture (28, 30) de réception d'une pièce rapportée (32, 34) à fixer sur la deuxième pièce (16).

10. Elément de garnissage (10) d'un véhicule automobile comprenant un ensemble (12) selon l'une quelconque des revendications 1 à 9.

## Patentansprüche

1. Befestigungsanordnung (12) zur Befestigung von mindestens zwei Stücken (14, 16) aneinander, wobei die Anordnung (12) umfasst:
- ein erstes Stück (14), das einen Hauptkörper (18) umfasst, der sich v.a. in einer ersten Hauptrichtung (L1) erstreckt,
- mindestens ein zweites Stück (16), das eine Aufnahmeöffnung (24) zur Aufnahme des ersten Stücks (14) definiert,
wobei das erste Stück (14) ferner eine Lasche (36) umfasst,
wobei die Lasche (36) elastisch verformbar ist in Bezug auf den Hauptkörper (18) und ein Anschlagelement (44) umfasst, wobei das zweite Stück (16) eine Verrippung (72) umfasst,
**dadurch gekennzeichnet, dass** das erste Stück (14) und das zweite Stück (16) ferner jeweils erste und zweite Befestigungselemente (26) umfassen, die in einer Befestigungsstellung miteinander zusammenwirken,
wobei das erste Stück (14) beweglich ist zwischen mindestens der Befestigungsstellung, in der das erste Stück (14) in der Aufnahmeöffnung (24) positioniert ist und die Verrippung (72) vom Anschlagelement (44) der Lasche (36) beabstandet ist, und einer Haltestellung, in der das erste Stück (14) in Bezug auf das erste Stück (16) hervorsteht, wobei die Verrippung (72) am Anschlagelement (44) der Lasche (36) anliegt.

2. Anordnung (12) nach Anspruch 1,
wobei das erste Stück (14) ferner einen Fanghaken (62) umfasst,
wobei die Lasche (36) und der Fanghaken (62) in der ersten Hauptrichtung (L1) einander gegenüberliegend auf einem Umfang (38) des ersten Stücks (14) angeordnet sind.

3. Anordnung (12) nach Anspruch 2,
wobei der Fanghaken (62) mindestens in der Haltestellung an einem Rand (76) der Aufnahmeöffnung (24) anliegt.

4. Anordnung (12) nach Anspruch 3,
wobei der Fanghaken (62) ferner eine untere Lasche (64) umfasst, die sich im Wesentlichen parallel zur ersten Hauptrichtung (L1) erstreckt,
wobei die untere Lasche (64) in der Befestigungs- und Haltestellung unter dem Rand (76) der Aufnahmeöffnung (76) angeordnet ist.

5. Anordnung (12) nach einem der Ansprüche 1 - 4,
wobei das erste Stück (14) relativ zum zweiten Stück (16) zwischen der Befestigungs- und der Haltestellung um eine Rotationsachse (A1) rotiert, die im Wesentlichen senkrecht zur ersten Hauptrichtung (L1) verläuft.

6. Anordnung (12) nach Anspruch 5,
wobei die Rotationsachse (A1) im Wesentlichen durch eine Lageroberfläche (78) zwischen dem Fanghaken (62) und dem zweiten Stück (16) verläuft.

7. Anordnung (12) nach Anspruch 5 oder 6,
wobei die Verrippung (72) eine Fase (74) umfasst, die sich im Wesentlichen parallel zur Rotationsachse (A1) erstreckt.

8. Anordnung (12) nach einem der Ansprüche 1 - 7,
wobei das Anschlagelement (44) ein Gehäuse (46) definiert,
wobei die Verrippung (72) im Gehäuse (46) in der Haltestellung abgestützt wird.

9. Anordnung nach einem der Ansprüche 1 - 8,
wobei der Hauptkörper (18) des ersten Stücks (14) mindestens eine Aufnahmeöffnung (28, 30) für ein auf dem zweiten Stück (16) zu befestigendes Einsatzstück (32, 34) definiert.

10. Auskleidungselement (10) für ein Kfz, umfassend eine Anordnung (12) nach einem der Ansprüche 1 - 9.

## Claims

1. An attachment assembly (12) for attaching at least two parts (14, 16) to one another, the assembly (12) comprising:
- a first part (14) comprising a main body (18) extending primarily along a first main direction (L1),
- at least one second part (16) defining a receiving opening (24) receiving the first part (14),
the first part (14) further comprising a tongue (36), the tongue (36) being resiliently deformable relative to the main body (18) and comprising a stop member (44), the second part (16) comprising a rib (72),
**characterized in that** the first part (14) and the second part (16) further respectively comprise first and second attachment members (26) cooperating with one another in an attachment position,
the first part (14) being movable between at least the attachment position in which the first part (14) is positioned in the receiving opening (24) and the rib (72) is separated from the stop member (44) of the tongue (36), and a retaining position in which the first part (14) is arranged protruding relative to the second part (16), the rib (72) abutting against the stop member (44) of the tongue (36).

2. The assembly (12) according to claim 1, wherein the first part (14) further comprises a retaining hook (62), the tongue (36) and the retaining hook (62) being arranged opposite one another along the first main direction (L1) on a perimeter (38) of the first part (14).

3. The assembly (12) according to claim 2, wherein the retaining hook (62) bears on an edge (76) of the receiving opening (24) at least in the retaining position.

4. The assembly (12) according to claim 3, wherein the retaining hook (62) comprises a lower tab (64) extending along a direction substantially parallel to the first main direction (L1), the lower tab (64) being arranged below the edge (76) of the receiving opening (76) in the attachment position and the retaining position.

5. The assembly (12) according to any one of claims 1 to 4, wherein the first part (14) is rotatable relative to the second part (16) about an axis of rotation (A1) substantially perpendicular to the first main direction (L1) between the attachment position and the retaining position.

6. The assembly (12) according to claim 5, wherein the axis of rotation (A1) passes substantially through a bearing surface (78) between the retaining hook (62) and the second part (16).

7. The assembly (12) according to claim 5 or 6, wherein the rib (72) comprises a chamfer (74) extending along a direction substantially parallel to the axis of rotation (A1).

8. The assembly (12) according to any one of claims 1 to 7, wherein the stop member (44) defines a housing (46), the rib (72) being received in abutment in the housing (46) in the retaining position.

9. The assembly according to any one of claims 1 to 8, wherein the main body (18) of the first part (14) defines at least one opening (28, 30) for receiving an insert (32, 34) to be attached on the second part (16).

10. A trim element (10) of a motor vehicle comprising an assembly (12) according to any one of claims 1 to 9.
